# NEUE EUROPÄISCHE PATENTSCHRIFT

(11) **EP 0 643 362 B2**
(45) Veröffentlichungstag und Bekanntmachung des Hinweises auf die Entscheidung über den Einspruch: **30.12.2009**
(45) Hinweis auf die Patenterteilung: 12.12.2001
(21) Anmeldenummer: 94110638.7
(22) Anmeldetag: 08.07.1994
(51) Int. Cl.: G06K 7/10

(54) **Vorrichtung zum Lesen von Informationen**
Apparatus for reading information
Appareil de lecture d'informations

(30) Priorität: 15.09.1993 DE 4331105
(43) Veröffentlichungstag der Anmeldung: 15.03.1995
(73) Patentinhaber: Datalogic Automation S.r.l., Lippo di Calderara di Reno (BO) (IT)
(72) Erfinder: Stanzani, Guiseppe, I-40131 Bologna (IT)
(74) Vertreter: Liesegang, Eva

(56) Entgegenhaltungen:
- EP-A- 0 444 958
- EP-A- 0 506 208
- EP-A- 0 553 504
- EP-A1- 0 424 096
- EP-A2- 0 452 274
- US- - 5 214 270
- US-A- 5 245 170
- PATENT ABSTRACTS OF JAPAN vol. 009, no. 250 (P-394), 8. Oktober 1985 & JP 60 102609 A (FUJITSU KK), 6. Juni 1985

## Beschreibung

Die Erfindung betrifft eine Vorrichtung zum Lesen von Informationen, insbesondere Strichcodes, mit einer Lichtquelle die einen gebündelten Lichtstrahl zu einem Polygon-Drehspiegel sendet, wodurch der Lichtstrahl -in einer Grundebene liegend- innerhalb eines Winkelbereichs hin- und herwandert, wobei reflektiertes Licht einem photoelektrischen Wandler zur Erfassung der Information zugeführt wird.

Eine Vielzahl von Gütern, insbesondere auch Fördergütern, wird mit einem Strichcode oder Barcode versehen, der auf opto-elektronischem Wege gelesen werden kann. Hierzu werden sogenannte Scanner eingesetzt. Diese Vorrichtungen zum Lesen von Informationen, nämlichen von den genannten Strichcodes, weisen jeweils eine Lichtquelle auf, die vorzugsweise als Laser ausgebildet ist, die einen gebündelten Lichtstrahl zu einer Ablenkeinrichtung, vorzugsweise einem Drehspiegel, sendet, wodurch der Lichtstrahl -in einer Ebene liegend- aufgefächert wird. Befindet sich in einer Leseebene, die von der Grundebene durchsetzt wird, der zu lesende Strichcode, so wird dieser von dem Lichtstrahl erfaßt. Reflektiertes Licht wird einem photoelektrischen Wandler des Scanners zugeführt, der die Informationen erfaßt und auswertet. Um den Informationsinhalt des Strichcodes einwandfrei erfassen zu können, ist es erforderlich, daß der Abtaststrahl entlang seiner Auftrefflinie den gesamten Strichcode bei einem Strahldurchgang überstreicht. Wird nur eine Teilanzahl der Code-Lücken und Code-Striche erfaßt, so kann die Information nicht vollständig gelesen werden. Es kommt also darauf an, daß sich die Auftrefflinie des Abtaststrahls -quer zu den Strichen des Strichcodes- über den gesamten Code erstreckt. Für den Lesevorgang ist es daher erforderlich, daß der Strichcode in entsprechend ausgerichteter Position die Auftrefflinie passiert, wenn beispielsweise mit Strichcodes versehene Güter an dem Scanner vorbeigeführt werden.

Um eine omni-direktionale Lesung durchzuführen, also eine Lesung, bei der der Strichcode in lageunabhängiger Postion den Scanner passiert, ist es bekannt, zwei Scannervorrichtungen einzusetzen, die jeweils eine Auftrefflinie erzeugen, wobei die beiden Auftrefflinien sich kreuzen. Dies hat zur Folge, daß zumindest eine der beiden Auftrefflinien den Gesamtcode durchsetzt, sofern es sich um einen sogenannten oversquared Strichcode handelt. Ein oversquared Strichcode ist dadurch definiert, daß seine Höhe (Strichlänge) größer als die Breite der gesamten Strich-Lücken-Anordnung ist, das heißt, hierdurch wird der entsprechende Abtaststrahl bei einem Durchgang alle Striche und Lücken erfassen können. Der Einsatz zweier Scanner-Vorrichtungen ist relativ aufwendig und kostenintensiv.

Die EP-A-0 553 504 offenbart einen optischen Scanner mit einem Polygonspiegel zum Erzeugen einer Vielzahl von sich schneidenden Abtastlinien auf einer Oberfläche, welche Informationen trägt, die abgetastet werden soll. Ahnliche Scanner sind in der EP-A-0 444 958 und der US-A-5 254 170 offenbart.

Die EP-A-0 506 208 betrifft einen Scanner zum Lesen von Strichcodes, der mit Hilfe von drei in einem Kreis, mit Abstand zueinander angeordneten Spiegeln ein Abtastmuster aus mindestens drei sich schneidenden Abtastlinien erzeugt.

EP-A-0 452 274 beschreibt eine Lesevorrichtung für Strichcodes, welche aus einer stationären Einheit und einer mobilen Einheit besteht. Die mobile Einheit enthält eine Laserdiode als Lichtquelle der Lesevorrichtung, einen Polygon-Drehspiegel und einen fotoelektrischen Wandler in einem tragbaren, pistolenförmigen Gehäuse und ist als Einstrahl-Lesevorrichtung ausgebildet. Die stationäre Einheit enthält in einem Gehäuse neben der erforderlichen elektronischen Einrichtung zur Verarbeitung der Signale des Wandlers zwei Winkelspiegel und besitzt eine Aufnahme für das frontseitige Ende der mobilen Einheit, welche derart angeordnet ist, dass der aus dem pistolenförmigen Gehäuse der mobilen Einheit austretende Lichtstrahl die Winkelspiegel überstreicht und dadurch ein aus mehreren sich kreuzenden Linien bestehendes Abtastmuster erzeugt, wenn besagtes frontseitiges Ende in der Aufnahme aufgenommen ist. Somit entsteht durch Einstecken in die stationäre Einheit aus der mobilen Einstrahl-Lesevorrichtung eine stationäre Kreuzstrahl-Lesevorrichtung. Mit der stationären Vorrichtung lassen sich Strichcodes an Objekten abtasten, die von einer Bedienungsperson an dem Lesefenster vorbeigeführt werden. Die mobile Einheit kann aus der Aufnahme der stationären Einheit entnommen werden, wobei sie über ein flexibles Kabel mit dem stationären Gehäuse verbunden bleibt, um von Hand Strichcodes auf großen oder schweren Produkten lesen zu können.

EP-A-0 424 096 beschreibt eine stationäre Strichcode-Lesevorrichtung, welche ein Gehäuse aufweist, in dem eine Lichtquelle, ein erster Umlenkspiegel, ein Polygon-Drehspiegel und ein einem Lesefenster gegenüberliegender zweiter Umlenkspiegel angeordnet sind. Die bekannte Vorrichtung kann entweder als Einstrahl-Lesevorrichtung oder als Kreuzstrahl-Lesevorrichtung ausgebildet sein. Die Umrüstung erfolgt dabei durch den Austausch des zweiten Umlenkspiegels, der entweder als Einfachspiegel oder als z.B. zweischenkliger Winkelspiegel ausgebildet ist.

EP-A-0 359 010 bezieht sich auf eine stationäre Kreuzstrahl-Lesevorrichtung mit einem Polygon-Drehspiegel und einem innerhalb des Gehäuses der Vorrichtung angeordneten Winkelspiegel, wobei das Licht einer Lichtquelle, welches über den Polygon-Drehspiegel auf den Winkelspiegel einfällt und an dem Winkelspiegel nach zwei entgegengesetzten Seiten reflektiert wird, durch zusätzliche Umlenkspiegel zu der Lesefläche umgelenkt werden, wo ein Kreuzstrahl-Abtastmuster gebildet wird. In dieser Druckschrift ist offenbart, auf der Grundlage von mehreren Lesungen, welche jeweils nur einen Teil des Strichcodes abgetastet haben, den gesamten Strichcode zu rekonstruieren.

Die Erfindung sieht eine Vorrichtung zum Lesen von Informationen mit den Merkmalen von Anspruch 1 vor.

Der Erfindung liegt daher die Aufgabe zugrunde, eine Vorrichtung zum Lesen von Informationen zu schaffen, die eine omni-direktionale Lesung gestattet und dennoch sehr einfach aufgebaut ist.

Diese Aufgabe wird erfindungsgemäß durch einen Gegenstand mit den Merkmalen des Anspruchs 1 gelöst. Erfindungsgemäß ist also nur eine Scanner-Einrichtung erforderlich, mit der mittels nur eines geringen Mehraufwandes dennoch eine omni-direktionale Lesung der Informationen möglich ist. Dies erfolgt durch den Winkelspiegel, der aus dem einen von der Lichtquelle stammenden Lichtstrahl in der Leseebene ein Abtastkreuz erzeugt, wodurch Strichcodes in beliebiger Lage lesbar sind.

Nach einer Weiterbildung der Erfindung ist vorgesehen, daß die beiden Auftrefflinien im rechten Winkel zueinander verlaufen.

Nach einem bevorzugten Ausführungsbeispiel der Erfindung grenzen die beiden Spiegelebenen unter Ausbildung einer Gehrung aneinander. Hierunter ist eine Abschrägung am Zusammenstoß der beiden Spiegelebenen zu verstehen.

Die Ablenkeinrichtung ist als sich drehendes Spiel-Polygonrad ausgebildet. Die Lichtquelle kann als Laser ausgeführt sein.

Die Zeichnung veranschaulichen die Erfindung anhand eines Ausführungsbeispiels und zwar zeigt:
- Figur 1: eine perspektivische Darstellung einer Vorrichtung, die den Strichcode auf einem sich bewegenden Gut erfaßt,
- Figur 2: ein oversquared Strichcode,
- Figur 3: ein nicht oversquared Strichcode,
- Figur 4: ein Prinzipbild einer Vorrichtung,
- Figur 5: eine Prinzipdarstellung der mit Winkelspiegel versehenen Vorrichtung,
- Figur 6: ein Prinzipbild der Strahlführung und
- Figur 7: eine Vorrichtung in geöffnetem Zustand.

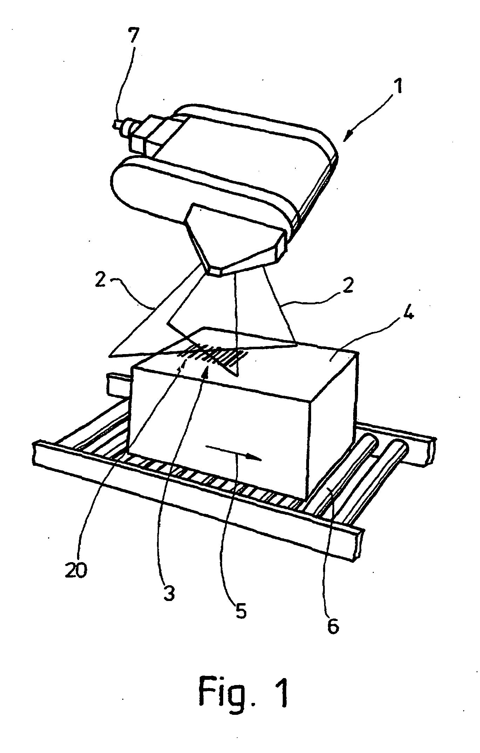

Die Figur 1 zeigt eine Vorrichtung 1 zum Lesen von Informationen, die mit optischen Abtaststrahlen 2 einen Strichcode 3 abtastet, der sich auf einem Fördergut 4 befindet, das sich in Richtung des Pfeiles 5 entlang einer Rollenbahn 6 bewegt. Die Vorrichtung 1 ist ortsfest mittels einer nicht dargestellten Gestells gehalten. Die gelesenen Informationen, das heißt, die Daten des Strichcodes 3, werden beispielsweise mittels einer elektrischen Verbindung 7 einem Computer oder einer Weiterverarbeitungs-Einrichtung zugeführt.

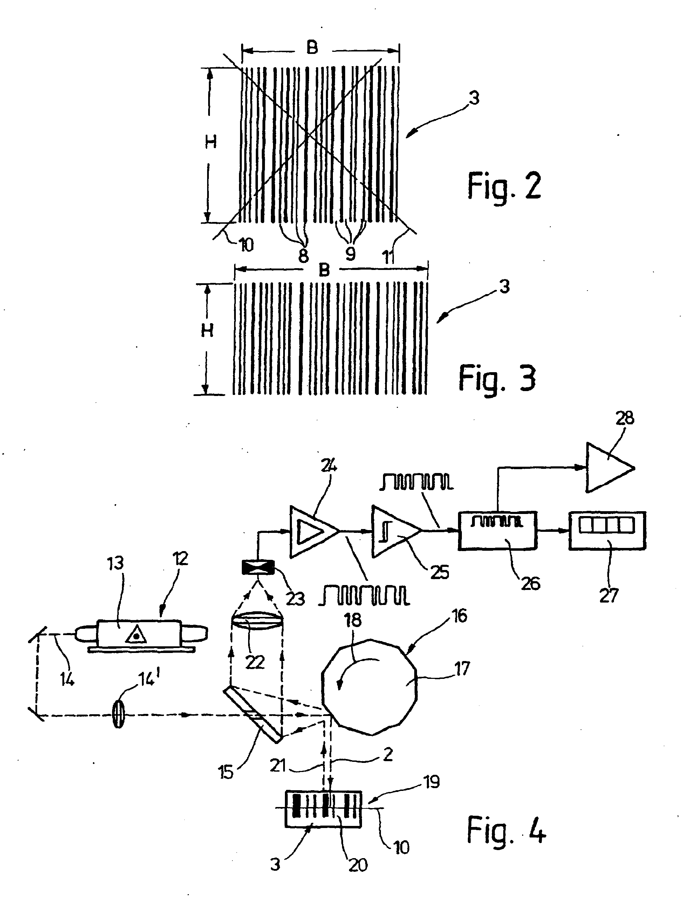

Die Figur 2 zeigt ein Beispiel eines Strichcodes 3, der eine Vielzahl von dünnen und dicken Strichen 8 sowie schmalen und breiten Lücken 9 aufweist. Die Länge der Striche H ist geringfügig größer als die Breite B des gesamten Strichcodes. Es handelt sich daher um einen sogenannten oversquared Strichcode 3, das heißt bei einer Abtastung mittels zweier, 90° einschließender Auftrefflinien 10 und 11 zweier Abtaststrahlen 2 der Vorrichtung 1 durchsetzt zumindest stets eine Auftrefflinie (hier die Auftrefflinie 11) den Informationsinhalt aller Striche 8 und Lücken 9, so daß eine omni-direktionale Lesung erfolgen kann. Hierunter versteht man eine in beliebiger Lage des Strichcodes mögliche Informationsbestimmung.

Vergleicht man den Strichcode der Figur 2 mit dem Strichcode der Figur 3, so besteht dort der Unterschied, daß die Höhe H kleiner als die Breite B ist. Der in Figur 3 dargestellte Strichcode 3 ist daher nicht oversquared, so daß es Positionen gibt, bei denen die Auftrefflinien 10 und 11 nicht die Gesamtinformation erfassen können. Mit technischen Mitteln kann dieser Nachteil jedoch beseitigt werden. Hierauf wird nachfolgend noch näher eingegangen.

Anhand der Figur 4 wird der Aufbau der Vorrichtung 1 schematisch wiedergegeben. Eine Lichtquelle 12, die vorzugsweise als Laser 13 ausgebildet ist, sendet einen Lichtstrahl 14 aus, der -gegebenenfalls mehrfach umgelenkt- eine Sammellinse 14' passiert und einen halbdurchlässigen Spiegel 15 durchdringt sowie anschließend auf eine Ablenkeinrichtung 16 fällt. Die Ablenkeinrichtung 16 ist als mit Spiegeln versehenes Polygon-Rad 17 ausgebildet, das sich mit hoher Drehzahl ( Fall 18) dreht. Hierdurch wird der einen Abtaststrahl 2 bildende Lichtstrahl einer Leseebene 19 zugeführt, in der sich die Informationen 20 befinden, die als Strichcode 3 ausgebildet sind. Die Gesamtinformation des Strichcodes 3 wird dadurch erfaßt, daß aufgrund der Drehung des Polygon-Rades 17 der Abtaststrahl innerhalb eines Winkelbereichs hin- und herschwenkt, so daß seine Auftrefflinie 10 quer, vorzugsweise senkrecht, zu den Strich-Längserstreckungen des Codes verläuft. Reflektiertes Licht 21 wird vom Strichcode 3 zum Polygon-Rad 17 zurückgeworfen und gelangt von dort auf den halbdurchlässigen Spiegel 15, der das reflektierte Licht 21 einer Sammellinse 22 zuführt, die es auf einen photoelektrischen Wandler 23 leitet. Die der Information entsprechenden Daten werden einem Verstärker 24 sowie einer Digitalisier-Stufe 25 und einem Decoder 26 zugeführt, der die Informationen auf einer Anzeige 27 darstellt beziehungsweise einer Schnittstelle 28 zuführt.

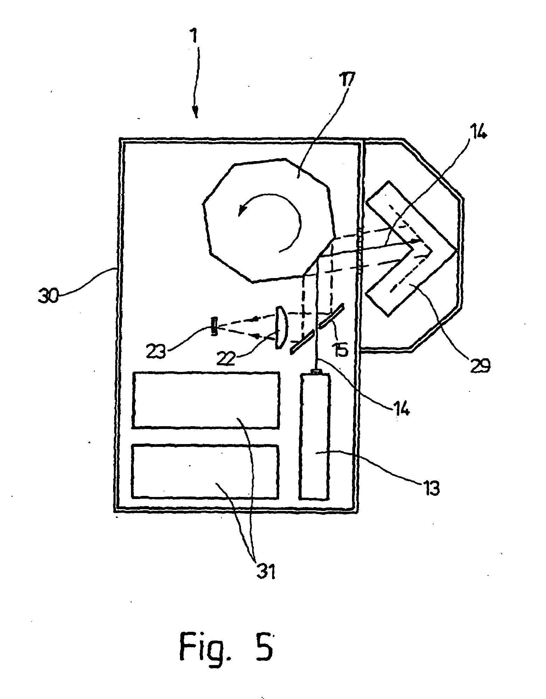

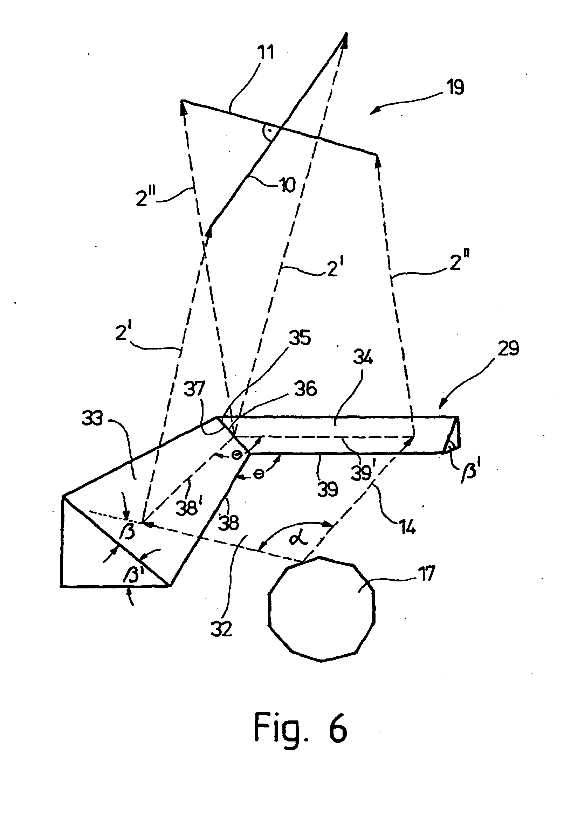

Beim Gegenstand der Erfindung besteht die in der Figur 4 aus Gründen der Vereinfachung nicht dargestellte Besonderheit, daß der Lichtstrahl 14 -vom Polygon-Rad 17 kommend- zunächst auf einen Winkelspiegel 29 trifft und von dort als Abtaststrahl der Leseebene zugeführt wird. Die Figur 5 zeigt ein Gehäuse 30, in dem sich das Polygon-Rad 17, der halbdurchlässige Spiegel 15, der Laser 13, die Sammellinse 22, der photoelektrische Wandler 23 sowie elektronische Einrichtungen 31 befinden. Weitere Baugruppen, die ferner für die Funktion der Vorrichtung 1 notwendig sind, wurden -aus Gründen der Vereinfachung- in der Figur 5 vernachlässigt. Auf die Besonderheit des Winkelspiegels 29 wird anhand der schematischen Darstellung der Figur 6 eingegangen. Es ist erkennbar, daß der vom sich drehenden Polygon-Rad 17 kommende Lichtstrahl 14 -in einer Grundebene 32 liegend- innerhalb eines Winkelbereichs α hin- und hergeschwenkt wird. Der Winkel α beträgt vorzugsweise 90°. Dabei trifft er auf zwei Spiegelebenen 33 und 34 des Winkelspiegels 29. Die Spiegelebene 33 bildet eine erste Spiegelebene; die Spiegelebene 34 eine zweite Spiegelebene. Wie in der Figur 6 erkennbar, durchsetzen die beiden Spiegelebenen 33 und 34 die Grundebene 32 in schrägwinkeliger Position unter Ausbildung eines spitzen Winkels β, der sich als Stufenwinkel β' entsprechend der dreieckförmigen Querschnittsperipherie des Winkelspiegels 29 wiederholt. Der Winkel β beziehungsweise β' beträgt vorzugsweise 34°. Gleiche Winkelverhältnisse gelten bezüglich der zweiten Spiegelebene 34. Die beiden Spiegelebenen 33 und 34 bilden eine Abschrägung 35 an ihrem Zusammenstoß 36 aus, das heißt, sie grenzen unter Ausbildung einer Gehrung 37 aneinander. Der Winkelspiegel 29 reflektiert vom Lichtstrahl 14 Abtaststrahlen 2' und 2'', die in einer Leseebene 19 zwei Auftrefflinien 10 und 11 erzeugen, die quer zueinander verlaufen und einander kreuzen. Das Wort "quer" bedeutet nicht unbedingt, daß es sich um einen 90° Winkel zwischen den beiden Auftrefflinien 10 und 11 handelt. Vorzugsweise ist jedoch vorgesehen, daß der Winkel zwischen den beiden Auftrefflinien 10 und 11 rechtwinklig ist. Gemäß Figur 6 erzeugt die Spiegelebene 33 Abtaststrahlen 2'. Die Spiegelebene 34 sendet Abtaststrahlen 2'' aus. Von den Abtaststrahlen 2' und 2'' sind jeweils nur die "endseitigen" Strahlen dargestellt. Die Abtaststrahlen 2' und 2'' resultieren aus der Reflexion des Lichtstrahls 14, der entlang von Auftrefflinien 38' und 39' auf beide Spiegelebenen 33 und 34 trifft. Zwischen den Abtaststrahlen 2' bildet sich in der Leseebene 19 die Auftrefflinie 10 und zwischen den Abtaststrahlen 2'' die Auftrefflinie 11 aus.

Die beiden Spiegelebenen 33 und 34 bilden zwischen sich einen Winkel θ aus. Der Winkel θ beträgt vorzugsweise 90°. Dies ist in der Figur 6 dargestellt. Der Winkel θ bildet sich zwischen den unteren Längsrändern 38 und 39 der beiden Spiegelebenen 33 und 34 aus, sofern die Längsränder 38 und 39 parallel zu den Auftrefflinien 38' und 39' des Lichtstrahls 14 auf den Spiegelebenen 33 und 34 verlaufen. Aufgrund der geometrischen Verhältnisse ist jedoch der Winkel θ auch -in der Grundebene 32 liegend- zwischen den beiden Spiegelebenen 33 und 34 ausgebildet. Auch dies ist in der Figur 6 zur Verdeutlichung angegeben.

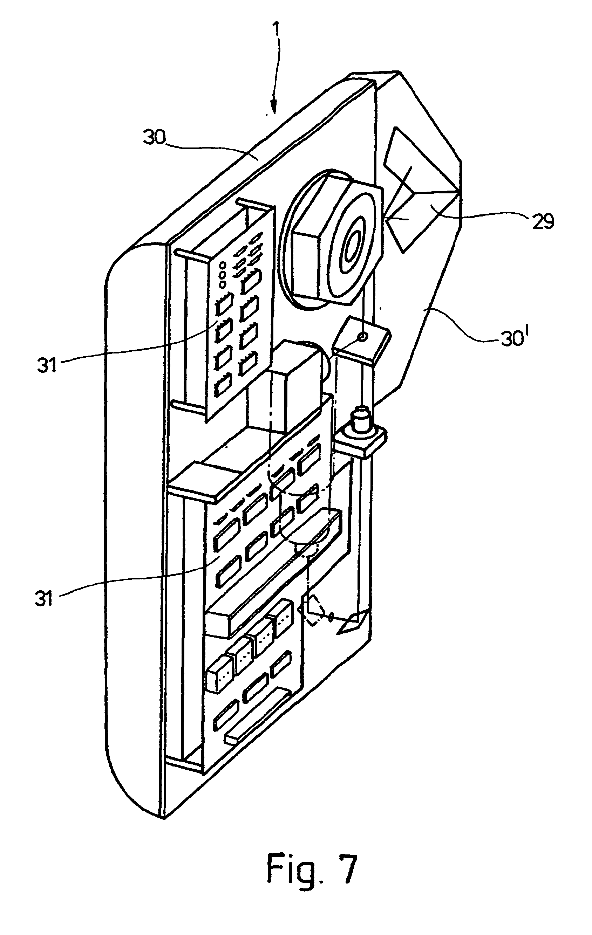

In der Figur 7 ist eine geöffnete Vorrichtung 1 nochmals zur näheren Verdeutlichung wiedergegeben. Der Winkelspiegel 29 befindet sich in einem Zusatzgehäuse 30', das an dem Gehäuse 30 befestigbar ist. Auf diese Art und Weise wird die Vorrichtung 1, die als Einstrahl-Scanner ausgebildet ist, in einen Kreuzstrahl-Scanner umgewandelt, so daß eine omni-direktionale Lesung möglich ist. Der entsprechende Aufwand ist daher sehr gering.

Die in Fig. 7 gezeigten elektronischen Einrichtungen 31 ermöglichen eine omni-direktionale Lesung eines Strichcodes 3 auch dann, wenn dieser als nicht oversquared ausgebildet ist. Dies erfolgt dadurch, daß beim Passieren des Strichcodes die Auftrefflinien 10 und 11 den Strichcode 3 "scheibchenweise" abtasten, das heißt, bei jedem Strahldurchgang wird die Lesung durchgeführt und das Ergebnis in einem elektronischen Speicher gespeichert. Erfolgt der nächste Strahldurchgang, so ist der Strichcode aufgrund des sich vorbeibewegenden Förderguts 4 weitergewandert, so daß andere Positionen des Strichcodes entlang der Auftrefflinien 10 und 11 erfaßt werden. Dieser Vorgang erfolgt mehrfach, bis durch elektronisches Zusammensetzen der verschiedenen abgespeicherten Teilinformationen die Gesamtinformation gebildet und als Ergebnis der Lesung aufgefunden wird.

## Patentansprüche

1. Stationäre Vorrichtung zum Lesen von Strichcodes, die auf Gütern vorgesehen sind, welche sich auf einer Fördereinrichtung an der stationären Vorrichtung vorbei bewegen, mit einer Lichtquelle (12), die einen gebündelten Lichtstrahl zu einem Polygon-Drehspiegel (17) sendet, wodurch der Lichtstrahl - in einer Grundebene (32) liegend - innerhalb eines Winkelbereichs (α) hin- und herwandert, wobei reflektiertes Licht einem photoelektrischen Wandler (23) zur Erfassung der Strichcodes zugeführt wird, und wobei im Bereich der Grundebene (32) zusätzlich zu dem Drehspiegel (17) ein zweischenkliger Winkelspiegel (29) für ein omnidirektionales Lesen der Strichcodes in einem Zusatzgehäuse (30') der Vorrichtung außerhalb des Gehäuses (30) in dem Bereich, in dem der Lichtstrahl aus dem Gehäuse (30) austritt, angeordnet ist, wobei das Zusatzgehäuse an dem Gehäuse (30) befestigt ist, so daß eine stationäre Einstrahl-Lesevorrichtung in eine stationäre Kreuzstrahl-Lesevorrichtung umgewandelt wird, und wobei der Winkelspiegel (29) eine erste Spiegelebene (33) und eine zweite Spiegelebene (34) aufweist, wobei die erste Spiegelebene (33) und die zweite Spiegelebene (34) für eine Umlenkung des Lichtstrahls (14) in schrägwinkliger Position die Grundebene (32) durchsetzen und ferner unter einem Winkel (θ) zueinander verlaufen, derart, daß der von dem Polygon - Drehspiegel kommende und aus dem Gehäuse (30) austretende Lichtstrahl auf die erste und zweite Spiegelebene (33, 34) auftrifft und auf eine Leseebene (19), in der sich der Strichcode (20) befindet, ein von der ersten Spiegelebene (33) stammender erster Abtaststrahl (2', 2') sowie ein von der zweiten Spiegelebene (34) stammender zweiter Abtaststrahl (2", 2") auftreffen, wobei die Auftrefflinie (10) des ersten Abtaststrahls (2', 2') quer zu der Auftrefflinie (11) des zweiten Abtaststrahls (2", 2") verläuft und die beiden Auftrefflinien (10, 11) sich kreuzen und mit einer elektronischen Einrichtung (31) zum mehrfachen Abtasten des Strichcodes und Verarbeiten der mehrfachen Abtastungen, um den Strichcode zu lesen, während der Strichcode sich an den Auftrefflinien (10, 11) vorbeibewegt, derart, daß die Ergebnisse von Abtastungen abgespeichert werden und die Gesamtinformation durch Zusammensetzen der verschiedenen gespeicherten Teilinformationen, die den gespeicherten Ergebnissen von Abtastungen entsprechen, gebildet und als Ergebnis der Lesung aufgefunden wird.

2. Vorrichtung nach Anspruch 1, **dadurch gekennzeichnet, daß** die beiden Auftrefflinien (10, 11) im rechten Winkel zueinander verlaufen.

3. Vorrichtung nach einem der vorhergehenden Ansprüche, **dadurch gekennzeichnet, daß** die beiden Spiegelebenen (33, 34) unter Ausbildung einer Gehrung (37) aneinandergrenzen.

4. Vorrichtung nach einem der vorhergehenden Ansprüche, **dadurch gekennzeichnet, daß** die Lichtquelle (12) als Laser (13) ausgebildet ist.

5. Vorrichtung nach einem der vorhergehenden Ansprüche, **dadurch gekennzeichnet, daß** der Winkelbereich (α) den Wert 90° aufweist.

6. Vorrichtung nach einem der vorhergehenden Ansprüche, **dadurch gekennzeichnet, daß** der Winkel (β bzw. β') zwischen der ersten bzw. der zweiten Spiegelebene (33 bzw. 34) und der Grundebene (32) den Wert 34° aufweist.

7. Vorrichtung nach einem der vorhergehenden Ansprüche, **dadurch gekennzeichnet, daß** der Winkel (θ) den Wert 90°aufweist.

## Claims

1. Stationary apparatus for reading bar codes which are provided on goods which move on a conveyor means past the stationary apparatus, comprising a light source (12) emitting a bundled light beam to a polygonal rotating mirror (17), wherein the light beam - lying in a primary plane (32) - is moving back and forth within an angle range (α), wherein reflected light is forwarded to a photoelectric transducer (23) for acquiring the bar codes, and in the area of the primary plane (32), in addition to the rotating mirror (17), a two-legged angle mirror (29) for omnidirectional reading of the barcodes is positioned in an additional housing (30') of the apparatus outside the housing (30) in the area in which the light beam emerges from the housing (30), while the additional housing is fixed to the housing (30), so that a stationary single-beam reading apparatus is converted into a stationary crossed-beam reading apparatus and wherein the angle mirror (29) comprises a first mirror plane (33) and a second mirror plane (34), wherein the first mirror plane (33) and the second mirror plane (34) are obliquely penetrating the primary plane (32) for deflecting the light beam and further define an angle (θ) between each other such that the light beam coming from the polygonal rotating mirror and emerging from the housing (30) impinges on the first and second mirror plane (33, 34) and a first scanning beam (2',2') coming from the first mirror plane (33) and a second scanning beam (2",2") coming from the second mirror plane (34) impinge on a reading plane (19), in which the barcode (20) is located, wherein the impinging line (10) of the first scanning beam (2',2') is oblique with respect to the impinging line (11) of the second scanning beam (2",2") and the two impinging lines (10, 11) cross each other, and with an electronic device (31) for multiple scanning of the bar code and processing of the multiple scans, in order to read the bar code, while the bar code passes by the impinging lines (10, 11) in such a way that the results of scans are stored and the total information is formed by combining the various stored items of partial information which correspond to the stored results of scans and is retrieved as the result of the reading.

2. Apparatus according to claim 1, **characterized in that** the two impinging lines (10, 11) define an angle of 90 degrees.

3. Apparatus according to one of the preceding claims, **characterized in that** the two mirror planes (33, 34) are abutting while forming a mitre (37).

4. Apparatus according to one of the preceding claims, **characterized in that** the light source (12) is a laser (13).

5. Apparatus according to one of the preceding claims, **characterized in that** the angle range (α) is 90°.

6. Apparatus according to one of the preceding claims, **characterized in that** the angle (β or β') between the first and the second mirror plane (33 and 34) respectively and the primary plane (32) is 34°.

7. Apparatus according to one of the preceding claims, **characterized in that** the angle (θ) is 90°.

## Revendications

1. Dispositif fixe de lecture de codes à barres prévus sur des marchandises qui se déplacent devant le dispositif fixe sur un dispositif convoyeur, comportant une source de lumière (12), qui émet un faisceau de lumière focalisé en direction d'un miroir polygonal rotatif (17), ce qui a pour effet que le faisceau de lumière se déplace en va-et-vient - en étant situé sur un plan de base (32) - à l'intérieur d'une plage angulaire (α), où la lumière réfléchie est envoyée à un convertisseur photoélectrique (23) pour la saisie des codes à barres, et où, au niveau du plan de base (32), il est prévu, en plus du miroir rotatif (17), un miroir en coin (29) à deux branches pour une lecture omnidirectionnelle du code à barres dans un boîtier supplémentaire (30') du dispositif, à l'extérieur du boîtier (30) dans la zone où le faisceau de lumière sort du boîtier (30), où le boîtier supplémentaire est fixé sur le boîtier (30), de manière à convertir un dispositif de lecture fixe à un seul faisceau en un dispositif de lecture fixe à faisceaux croisés, et où le miroir en coin (29) comporte un premier plan de miroir (33) et un second plan de miroir (34), le premier plan (33) du miroir et le second plan (34) du miroir intersectant le plan de base (32) dans une position oblique pour dévier le faisceau de lumière (14) et formant en outre entre eux un angle (θ) de telle sorte que le faisceau de lumière provenant du miroir polygonal rotatif et sortant du boîtier (30) est incident sur le premier et le second plans de miroir (33, 34), et qu'un premier faisceau de balayage (2', 2') provenant du premier plan (33) du miroir, ainsi qu'un second faisceau de balayage (2", 2") provenant du second plan (34) du miroir, rencontrent un plan de lecture (19) où est situé le code à barres (20), où la ligne d'impact (10) du premier faisceau de balayage (2', 2') s'étend transversalement par rapport à la ligne d'impact (11) du second faisceau de balayage (2", 2") et les deux lignes d'impact (10, 11) se croisent, et comportant un dispositif électronique (31) pour l'exploration multiple du code à barres et le traitement des balayages multiples pour lire le code à barres alors que le code à barres se déplace contre les lignes d'impact (10, 11), de telle manière que les résultats d'explorations sont mémorisés et que l'information totale est formée par regroupement des différentes informations partielles mémorisées correspondant aux résultats mémorisés d'explorations, et est trouvée comme résultat de lecture.

2. Dispositif selon la revendication 1, **caractérisé en ce que** les deux lignes d'impact (10, 11) sont perpendiculaires entre elles.

3. Dispositif selon l'une des revendications précédentes, **caractérisé en ce que** les deux plans (33, 34) du miroir se rencontrent selon une disposition en onglet (37).

4. Dispositif selon l'une des revendications précédentes, **caractérisé en ce que** la source de lumière (12) est agencée sous la forme d'un laser (3).

5. Dispositif selon l'une des revendications précédentes, **caractérisé en ce que** la plage angulaire (α) possède la valeur 90°.

6. Dispositif selon l'une des revendications précédentes, **caractérisé en ce que** l'angle (β ou β') entre les premier et second plans (33 et 34) du miroir et le plan de base (32) possède la valeur 34°.

7. Dispositif selon l'une des revendications précédentes, **caractérisé en ce que** l'angle (θ) possède la valeur 90°.
